Europäisches Patentamt

European Patent Office

Office européen des brevets

(11) Veröffentlichungsnummer: **0 441 219 B1**

(12) **EUROPÄISCHE PATENTSCHRIFT**

(45) Veröffentlichungstag der Patentschrift: **30.08.95**

(51) Int. Cl.⁶: **C04B** 35/00, C08K 3/00

(21) Anmeldenummer: **91101098.1**

(22) Anmeldetag: **28.01.91**

(54) **Giessmasse zur Herstellung keramischer Grünfolien und ihre Verwendung.**

(30) Priorität: **03.02.90 DE 4003197**
**25.05.90 DE 4016861**

(43) Veröffentlichungstag der Anmeldung:
**14.08.91 Patentblatt 91/33**

(45) Bekanntmachung des Hinweises auf die
Patenterteilung:
**30.08.95 Patentblatt 95/35**

(84) Benannte Vertragsstaaten:
**DE FR GB IT NL**

(56) Entgegenhaltungen:
**WO-A-88/03917**
**DE-A- 3 724 108**
**FR-A- 2 628 674**
**US-A- 3 819 785**

(73) Patentinhaber: **HOECHST AKTIENGESELL-
SCHAFT**

**D-65926 Frankfurt am Main (DE)**

(72) Erfinder: **Aldinger, Fritz, Dr.**
**Barbarossastrasse 44**
**W-6458 Rodenbach (DE)**
Erfinder: **Fischer, Hannes, Dr.**
**Bachstrasse 22**
**W-6204 Taunusstein (DE)**
Erfinder: **Hessel, Friedrich, Dr.**
**Raiffeisenstrasse 18**
**W-6500 Mainz (DE)**
Erfinder: **Roosen, Andreas, Dr.**
**Rossertstrasse 6**
**W-6238 Hofheim (DE)**

## Beschreibung

Die vorliegende Erfindung betrifft eine Gießmasse zur Herstellung keramischer Grünfolien, ein Verfahren zur Herstellung von Grünfolien mit kontrollierter Brennschwindung und ein Verfahren zur Herstellung keramischer Substrate aus diesen Grünfolien.

Grünfolien aus keramischen Pulvern, beispielsweise aus Zirkondioxid, Aluminiumoxid, Aluminiumnitrid, Siliziumcarbid oder auch Hochtemperatursupraleiterpulvern, können durch Foliengießen von Schlickern hergestellt werden (Tape casting). Unter Schlicker wird dabei eine Dispersion keramischer Materialien in einer flüssigen Phase - meist einem organischen Lösemittel bzw. Lösemittelgemisch - verstanden, welches zusätzlich noch Dispergatoren, Binder und Weichmacher enthält. Diese Schlicker mit einer üblichen Viskosität von 3000 - 10.000 mPas werden in der Regel auf ein kontinuierlich laufendes Band aus Stahl, Kunststoff oder auf speziell beschichtete Unterlagen gegossen.

Man kann den Schlicker aber auch in Formen gießen. Auf dem Band, bzw. in den Formen verdampft das flüchtige organische Lösemittel, wobei eine flexible keramische Grünfolie entsteht. Die Folie wird aus den Formen entnommen, bzw. von dem kontinuierlich laufenden Band abgezogen. In einem sich anschließenden Formgebungsprozeß können durch Schneiden oder Stanzen aus der Grünfolie leicht entsprechende Formteile erhalten werden. Anschließend werden aus den Formteilen durch Erhitzen (Burn out) die organischen Bestandteile ausgetrieben. Durch weiteres Aufheizen auf die Sintertemperatur erfolgt die eigentliche Verdichtung der Formteile zu den gewünschten keramischen Artikeln, beispielsweise zu keramischen Substraten.

Das Foliengießen wird in allgemeiner Form abgehandelt in Keram. Zeitschr. 38 Nr. 2 (1986), S. 79-82. Dort sind auch die für das Formgebungsverfahren typischen organischen Hilfsstoffe aufgeführt.

Bei der Temperaturbehandlung zur Überführung der Formteile von dem grünen in den gesinterten Zustand tritt eine Schwindung der Dimensionen der Teile ein, die sogenannte Brennschwindung. Bei der Herstellung keramischer Bauteile nach diesem Verfahren muß daher die Brennschwindung bei der Formgebung einkalkuliert werden. Die grünen Teile müssen daher größer sein als die geforderten Endmaße. Üblicherweise liegen die Schwindungswerte zwischen 10 und 30 %. Die Nachbearbeitung von fertig gesinterten Keramikbauteilen ist sehr aufwendig und sehr teuer. Zudem werden solche Nachbearbeitungsschritte die Kenngrößen der fertigen Keramiken verschlechtert. Zum Beispiel können durch Bildung von Mikrorissen durch nachträgliche Bearbeitung die Festigkeiten negativ beeinflußt werden. Da es hierbei zu einer Veränderung des Gefüges an der Oberfläche der bearbeiteten Teile kommen kann, verringern sich die Einsatzmöglichkeiten dieser Teile.

Ein damit zusammenhängendes Problem besteht darin, daß im Laufe der Zeit unterschiedliche Chargen von Ausgangsprodukten, insbesondere an Bindemittel oder dem anorganischen Pigment eingesetzt werden müssen und es dadurch zu einer Änderung des Schrumpfverhaltens er Grünfolie kommt.

Daher ist für eine kostengünstige Herstellung keramischer Bauteile unbedingt die Einhaltung der Brennschwindung, und zwar bei Substraten in sehr engen Grenzen, notwendig.

Es ist zwar möglich, die Brennschwindung einer einmal vorliegenden Foliengießmasse durch Zusatz bestimmter Stoffe zu erhöhen. Damit läßt sich jedoch das Problem der Nichtkonstanz des Schwindungsverhaltens wegen verschiedener Chargen von Ausgangsprodukten nur mildern, aber nicht lösen. Andererseits lassen sich auch die Fertigungsparameter in den Herstellungsaggregaten an die Eigenschaften einer bestimmten Gießmasse anpassen; jedoch kann dadurch das Problem einer rationellen Fertigung nicht gelöst werden.

Die Schwindung hängt ab von den physikalischen und chemischen Eigenschaften der eingesetzten keramischen Pulver. Sie hängt ferner ab von der Dichte der keramischen Grünfolie, die durch die Eigenschaften des Pulvers und daneben vor allem durch die organischen Hilfsstoffe beeinflußt wird. Die Konstanz der Eigenschaften der keramischen Pulver kann erreicht werden durch Einhalten konstanter chemischer Zusammensetzung und konstanter Pulver-Korngrößen, wie (Primär-)Korngrößen, Kornverteilung und spezifischer Oberflächen. Auch das Mischen verschiedener Pulver zu einem Blend ist Stand der Technik.

Es bestand daher die Aufgabe, eine Gießmasse zu entwickeln, die zu konstanter Gründichte und folglich unter den zuvor angegebenen Voraussetzungen zu einer konstanten Schwindung beim Sintern führt. Die Erfindung beruht auf der Erkenntnis, daß es Polyvinylbutyral-Typen gibt, bei denen eine geringe Veränderung der Zusammensetzung nur zu einer geringen Änderung der Sinterschwindung führt. Daneben gibt es Bereiche (die nicht Bestandteil der Erfindung sind), bei denen eine geringe Änderung des Polyvinylbutyrals zu einer erheblichen Änderung der Sinterschwindung führt. Dieser Zusammenhang zwischen Zusammensetzung des Bindemittels und dem Schrumpfverhalten der Folie beim Sintern ist bisher nicht erkannt worden.

Es wurde nun eine Gießmasse zur Herstellung von keramischen Grünfolien gefunden, die

i ein flüchtiges organisches Lösungsmittel;

ii Polyvinylbutyral mit 16 bis 18 Gew.-% Vinylalkohol-Einheiten, mit maximal 2 Gew.-% Vinylacetat-Einheiten und mit einem mittleren Molekulargewicht im Bereich von 40 000 bis 120 000;

iii einen Weichmacher;

iv ein Dispergiermittel ausgewählt aus der Gruppe Fischöl, Fettsäureester, Ester von Phosphorsäure, ethoxylierte Alkohole, Polyethylenglykol und Ethylenoxid-Propylenoxid-Blockpolymere;

v und ein keramisches Pulver enthält.

Die erfindungsgemäßen Gießmassen sind hinsichtlich der Sintereigenschaften besonders "robust" gegenüber kleinen Änderungen in der Zusammensetzung. Darüberhinaus betrifft die Erfindung ein Verfahren zur Herstellung von Grünfolien durch Vergießen und Trocknen eines Schlickers, bei dem man die zeitlich aufeinanderfolgender Verwendung unterschiedlicher Chargen an Polyvinylbutyral darauf achtet, daß der Anteil an Vinylalkohol-Einheiten der verwendeten Polyvinylbutyral-Chargen sich um maximal 0.5 Gew.-% unterscheidet.

Die verwendeten Polyvinyl-butyrale lassen sich leicht in an sich bekannter Weise aus Polyvinylacetat herstellen. Das Molekulargewicht wird durch das Molekulargewicht des eingesetzten Polyvinylacetats bestimmt, da die Kettenlänge der Polymeren unverändert bleibt. Erfindungsgemäß einsetzbare Polyvinylbutyrale sind im Handel verfügbar, z.B. als ®Pioloform BM 18 (Hersteller: Wacker AG) oder ®Mowital B4O H (Hersteller: Hoechst AG).

Eine Foliengießmasse auf Basis Mowital B4O H wird beschrieben in der DE-PS 38 09 350. Aus dieser Literaturstelle ist ferner bekannt, daß als Bindemittel für Foliengießmassen üblicherweise handelsübliche Polyvinylbutyrale eingesetzt werden, die neben Vinylbutyraleinheiten ca. 0,5 bis 3 Gew.-% Vinylacetat und 12 bis 28 Gew.-% Vinylalkoholeinheiten enthalten. Es findet sich dort jedoch kein Hinweis, daß gerade Typen mit 16 bis 18 Gew.-% Vinylalkoholeinheiten und maximal 2 Gew.-% Vinylacetat-Einheiten zu einem besonders konstanten und niedrigen Sinterschrumpf führen.

Ganz ähnliche Foliengießmassen werden in der DE-PS 37 24 108 beschrieben. Dort werden für eine optimale Einstellung der Eigenschaften der Gießmasse Polyvinylbutyrale mit einem Gehalt an Vinylalkoholeinheiten von 16 Gew.-% verwendet. Die gemäß dieser Patentschrift eingesetzten Dispergiermittel, die in ihren Molekülen tertiäre Stickstoffatome und zwei unterschiedliche Oxalkyleneinheiten enthalten, sind für Gießmassen gemäß vorliegender Erfindung nicht erforderlich.

Geeignete erfindungsgemäße Foliengießmassen enthalten Aluminiumoxid, Aluminiumnitrid, Zirkondioxid, Magnesium-Spinell als keramisches Pulver. Es lassen sich aber auch andere keramische Pulver, wie z. B. Siliziumnitrid, Magnesiumoxid oder Bleititanat, zu einer Foliengießmasse verarbeiten. Besonders bevorzugt ist Aluminiumoxid.

Die Foliengießmassen auf Bindemittelbasis Polyvinylbutyral enthalten neben dem Bindemittel noch:

a) ein keramisches Material, bestehend aus Matrixmaterial wie z. B. Aluminiumoxid, Aluminiumnitrid, Berylliumoxid Zirkonoxid und Sinteradditiven, z. B. Oxiden von Silizium, Calcium, Magnesium oder Yttrium, Carbide wie SiC, Bariumtitanat, Nitride wie AlN und $Si_3N_4$, Cordierit, Mullit, Glaskermaik, Piezokeramik

b) ein flüchtiges organisches Lösemittel, wie Methanol, Ethanol, Isobutylalkohol, Methylethylketon, Trichlorethylen oder Toluol, sowie Gemische dieser Lösemittel.

c) ein Dispergiermittel, wie z. B. Fischöl, Ester von Fettsäuren, Ester von Phosphorsäure, ethoxylierte Alkohole, ethoxylierte Amine, Polyethylenglykol oder Ethylenoxid-Propylenoxid-Blockpolymere,

d) einen Weichmacher, z. B. einen Ester einer Dicarbonsäure wie Phthalsäure, Adipinsäure oder Sebacinsäure mit aliphatischen und/oder aromatischen einwertigen Alkoholen wie Butanol, Hexanol und Benzylalkohol oder Ester dieser Alkohole mit Phosphorsäure oder Ester von Monocarbonsäuren mit mehrwertigen Alkoholen.

Die Gießmassen weisen vorteilhafterweise eine Viskosität zwischen 2000 und 15000 mPa•s, insbesondere zwischen 3000 und 9000 mPa•s, auf.

In der PCT-Anmeldung US 87/03135 = WO 88/03917 wird angegeben, daß zur Herstellung von keramischen Schlickern eine weite Reihe von Polyvinylbutyral-Typen eingesetzt werden kann, beispielsweise die Typen mit der Handelsbezeichnung Butvar B-76, B-90 und B-98 und insbesondere B-79. Angaben zu Molekulargewicht, Viskosität, Gehalten an Vinylalkohol- und Vinylacetat-Einheiten dieser Polymere finden sich in Encyclopedia of Polymer Science and Engineering, Band 17 (1989), Seite 149.

Werden Polyvinylbutyrale mit einem Anteil an Vinylalkohol-Einheiten von über 18 Gew.-% eingesetzt, so wirken sich bereits geringe Änderungen in der chemischen Zusammensetzung deutlich auf die Schwindung der keramischen Substanz aus. Dies hängt möglicherweise mit der größeren Anzahl polarer Gruppen (im Polyvinylbutyral) zusammen, die zu einer stärkeren Wechselwirkung zwischen Binder und keramischem

3

Korn führt. Daher werden wahrscheinlich die für eine vollständige Dispergierung verantwortlichen Dispergiermittel von der Oberfläche des keramischen Pigments verdrängt. Höhere Acetatgehalte als 2 % erhöhen ebenfalls die Abhängigkeit der Brennschwindung von kleinen Änderungen in der chemischen Zusammensetzung.

Dagegen hängt die Schwindung der Foliengießmassen von Anspruch 1 in geringerem Maße von dem OH-Gehalt des Butyrals ab als bei Einsatz eines Butyrals mit mehr als 18 Gew.-% Vinylalkohol-Einheiten.

Die Erfindung wird anhand des Beispiels näher erläutert.

**Beispiel**

2000 g handelsübliches $\alpha$-Aluminiumoxid (mittlere Teilchengröße 3 $\mu$m, spezifische Oberfläche 3 m$^2$/g) enthaltend 4 Gew.-% Sinterhilfsmittel wurden vermischt mit 686 g Lösungsmittel (Trichlorethylen/Ethanol, 24,6:9,7) und 20 g Fischöl als Dispergiermittel. Die Suspension wurde 24 Stunden in einer Kugelmühle gemahlen. Dann wurden 76 g Polyvinylbutyral als Binder und die Weichmacher Dioctylphthalat (32 g) und Polyglykol B 11/300 (13 g; Hersteller Hoechst AG) zugegeben. Die Suspension wurde in bekannter Weise durch weiteres Mahlen zu einem keramischen Schlicker verarbeitet, der für ein blasenfreies Gießen noch entgast wurde. Anschließend wurde auf einer Labor-Gießapparatur, die nach dem "doctor blade" -Verfahren arbeitete, Filme gegossen. Die Filme wurden im Gegenstrom mit Luft getrocknet, vom Band entfernt und bei 1600 oder 1650°C gesintert, wobei jeweils die gleiche Enddichte erreicht wurde.

Es wurde beobachtet, daß mit zunehmender Gehalt an OH-Gruppen im Polyvinylbutyral die Viskosität des Butyrals (gemessen in einer alkoholischen Lösung) geringfügig zunahm. Gleichzeitig erhöhte sich die Menge des an Al$_2$O$_3$ adsorbierten Butyrals und die Viskosität des Schlickers. Dagegen gingen Dichte und Zugfestigkeit der erzeugten grünen Filme zurück.

In Abhängigkeit von dem Anteil an Vinylalkohol-Einheiten in Butyral wurden folgende Schwindungswerte ermittelt:

| Gehalt (Gew.-%) Vinylalkohol | Schwindung in % nach Sintern bei 1600°C | 1650°C |
|---|---|---|
| 16,1 | 16,1 | 16,4 |
| 18,4 | 16,6 | 16,9 |
| 19,4 | 17,1 | 17,6 |
| 22,9 | 17,5 | 18,0 |

**Patentansprüche**

1. Gießmasse zur Herstellung von keramischen Grünfolien enthaltend:
   i ein flüchtiges organisches Lösungsmittel;
   ii Polyvinylbutyral mit 16 bis 18 Gew.-% Vinylalkohol-Einheiten, mit maximal 2 Gew.-% Vinylacetat-Einheiten und mit einem mittleren Molekulargewicht im Bereich von 40 000 bis 120 000;
   iii einen Weichmacher;
   iv ein Dispergiermittel ausgewählt aus der Gruppe Fischöl, Fettsäureester, Ester von Phosphorsäure, ethoxylierte Alkohole, Polyethylenglykol und Ethylenoxid-Propylenoxid-Blockpolymere;
   v und ein keramisches Pulver.

2. Gießmasse gemäß anspruch 2, dadurch gekennzeichnet, daß das eingesetzte Polyvinylbutyral 16.0-17.0 Gew.-% Vinylalkohol-Einheiten enthält.

3. Gießmasse gemäß Anspruch 1, gekennzeichnet, durch eine Viskosität zwischen 2000 und 15.000 mPa•s, vorzugsweise zwischen 3000 und 9000 mPa•s, gemessen bei 20°C.

4. Gießmasse gemäß Anspruch 1, dadurch gekennzeichnet, daß das keramische Pulver ein feinteiliges Aluminiumoxid ist.

**5.** Gießmasse gemäß Anspruch 1, dadurch gekennzeichnet, daß als flüchtiges organisches Lösemittel ein Gemisch aus Trichlorethylen/Ethanol eingesetzt wird.

**6.** Gießmasse gemäß Anspruch 1, dadurch gekennzeichnet, daß als Weichmacher ein Dialkylphthalat, insbesondere Dioctylphthalat, eingesetzt wird.

**7.** Verfahren zur Herstellung von keramischen Grünfolien durch Vergießen und Trocknen eines Schlickers, der ein feinteiliges keramisches Pulver und organisches Lösemittel Polyvinylbutyral, Weichmacher und Dispergiermittel enthält, dadurch gekennzeichnet, daß die in Anspruch 1 verwendete Gießmasse verwendet wird.

**8.** Verfahren zur Herstellung eines keramischen Substrats durch thermische Behandlung und Sintern einer keramischen Grünfolie, dadurch gekennzeichnet, daß die Grünfolie nach dem Verfahren von Anspruch 7, hergestellt wird.

**9.** Keramische Grünfolie, hergestellt nach Anspruch 7.

**10.** Verfahren nach Anspruch 7, dadurch gekennzeichnet, daß man bei zeitlich aufeinander folgender Verwendung unterschiedlicher Chargen an Polyvinylbutyral darauf achtet, daß der Anteil an Vinylalkohol-Einheiten im Polyvinylbutyral der eingesetzten Chargen sich um maximal 0.5 Gew.-% von einem Sollwert unterscheidet.

**Claims**

**1.** A casting composition for producing ceramic green tapes, containing:
   i a volatile organic solvent,
   ii polyvinyl butyral with 16 to 18% by weight of vinyl alcohol units and with at most 2% by weight of vinyl acetate units, and having a mean molecular weight in the range from 40,000 to 120,000,
   iii a plasticizer,
   iv a dispersant selected from the group consisting of fish oil, fatty acid esters, esters of phosphoric acid, ethoxylated alcohols, polyethylene glycol and ethylene oxide/propylene oxide block polymers, and
   v a ceramic powder.

**2.** A casting composition as claimed in claim 1, wherein the polyvinyl butyral used contains 16.0-17.0% by weight of vinyl alcohol units.

**3.** A casting composition as claimed in claim 1, which has a viscosity of between 2,000 and 15,000 mPa.s, preferably between 3,000 and 9,000 mPa.s, measured at 20°C.

**4.** A casting composition as claimed in claim 1, wherein the ceramic powder is finely disperse alumina.

**5.** A casting composition as claimed in claim 1, wherein a mixture of trichloroethylene/ethanol is used as the volatile organic solvent.

**6.** A casting composition as claimed in claim 1, wherein a dialkyl phthalate, especially dioctyl phthalate, is used as the plasticizer.

**7.** A method for producing ceramic green tapes by casting and drying a slip which contains a finely disperse ceramic powder and organic solvent, polyvinyl butyral, plasticizer and dispersant, which comprises using the casting composition used in claim 1.

**8.** A method for producing a ceramic substrate by thermal treatment and sintering of a ceramic green tape, which comprises producing the green tape by the method as claimed in claim 7.

**9.** A ceramic green tape, produced as claimed in claim 7.

10. The method as claimed in claim 7, wherein, in the case of successive use of different batches of polyvinyl butyral, care is taken to ensure that the fraction of vinyl alcohol units in the polyvinyl butyral of the batches used differs by at most 0.5% by weight from a set value.

## Revendications

1. Masse de coulée pour la préparation de feuilles vertes de céramique, contenant
   i un solvant organique volatile ;
   ii du butyral de polyvinyle avec 16 à 18 % en poids de motifs d'alcool vinylique, avec au maximum 2 % de motifs d'acétate de vinyle et avec un poids moléculaire moyen dans le domaine de 40 000 à 120 000 ;
   iii un plastifiant ;
   iv un agent dispersant choisi dans le groupe comprenant l'huile de poisson, les esters d'acides gras, des esters de l'acide phosphorique, les alcools éthoxylés, le polyéthylène-glycol et des copolymères séquencés d'oxyde d'éthylène-oxyde de propylène ;
   v une poudre céramique.

2. Masse de coulée selon la revendication 1, caractérisée en ce que le butyral de polyvinyle utilisé contient 16,0-17,0 % en poids de motifs d'alcool vinylique.

3. Masse de coulée selon la revendication 1, caractérisée par une viscosité comprise entre 2 000 et 15 000 mPas, de préférence entre 3 000 et 9 000 mPas, mesurée à 20°C.

4. Masse de coulée selon la revendication 1, caractérisée en ce que la poudre céramique est un oxyde d'aluminium finement divisé.

5. Masse de coulée selon la revendication 1, caractérisée en qu'on utilise en tant que solvant organique volatile un mélange composé de trichloréthylène et d'éthanol.

6. Masse de coulée selon la revendication 1, caractérisée en qu'on utilise en tant que plastifiant le phtalate de dialkyle, plus particulièrement le phtalate de dioctyle.

7. Procédé pour la préparation de feuilles vertes céramiques par coulée et séchage d'une barbotine, qui contient une poudre céramique finement divisée et un solvant organique le butyral de polyvinyle, un plastifiant et un agent dispersant, caractérisé en ce qu'on utilise la masse de coulée utilisée dans la revendication 1.

8. Procédé pour la préparation d'un substrat céramique par traitement thermique et frittage d'une feuille verte céramique caractérisé en ce que la feuille verte est préparée selon le procédé de la revendication 7.

9. Feuille verte céramique préparée selon la revendication 7.

10. Procédé selon la revendication 7 caractérisé en que lorsqu'on utilise des charges de butyral de polyvinyle différentes successives dans le temps, on veille à ce que la teneur en motifs d'alcool vinylique dans le butyral de polyvinyle des charges utilisées ne diffère qu'au maximum de 0,5 % en poids de la teneur à respecter.